# EUROPÄISCHE PATENTANMELDUNG

(11) **EP 3 024 136 A1**
(43) Veröffentlichungstag der Anmeldung: **25.05.2016**
(21) Anmeldenummer: 14193658.3
(22) Anmeldetag: 18.11.2014
(51) Int. Cl.: H02P 21/05, H02P 25/02, H02P 25/06

(54) **Effiziente Dämpfung von Schwingungen einer elektrischen Maschine**

(71) Anmelder: Siemens Aktiengesellschaft, 80333 München (DE)
(72) Erfinder: Jäntsch, Michael, 91052 Erlangen (DE); Künzel, Stefan, 91056 Erlangen (DE); Bönke, Daniel, 90459 Nürnberg (DE); Spindler, Carsten, 07368 Remptendorf (DE)

(57) **Zusammenfassung**

Ein erstes Aktivteil (2) der elektrischen Maschine wird mittels eines Umrichters (3) an eine Versorgungsspannung (U) angeschaltet und dadurch mit Strömen (IR, IS, IT) eines Drehstromsystems beaufschlagt. Einer Steuereinrichtung (4) wird ein Geschwindigkeitssollwert (v*) vorgegeben. Anhand des Geschwindigkeitssollwerts (v*) schreibt die Steuereinrichtung (4) einen Basiskommutierungswinkel (ε1) fort. Anhand der Ströme (IR, IS, IT) des Drehstromsystems und eines Kommutierungswinkels (ε) ermittelt sie einen Längsstrom (ID) und einen Querstrom (IQ), die beide auf ein zweites Aktivteil (11) der elektrischen Maschine bezogen sind. Die Steuereinrichtung (4) führt einen Querstromsollwert und einen Querstrom (IQ) einem Querstromregler (13) zu, der daraus einen Querspannungssollwert (UQ*) ermittelt. Die Steuereinrichtung (4) führt einen Längsstromsollwert (ID*) und den Längsstrom (ID) einem Längsstromregler (15) zu, der daraus einen Längsspannungssollwert (UD*) ermittelt. Die Steuereinrichtung (4) ermittelt anhand des Längsspannungssollwerts (UD*), des Querspannungssollwerts (UQ*) und des Kommutierungswinkels (ε) für vom Umrichter (3) an das erste Aktivteil (2) auszugebende Spannungen (UR*, US*, UT*) eines Drehspannungssystems charakteristische Daten und gibt sie dem Umrichter (3) vor. Die Steuereinrichtung (4) ermittelt den Kommutierungswinkel (ε) unter Verwendung des Basiskommutierungswinkels (ε1) und eines Dämpfungskommutierungswinkels (ε2), den sie unter Verwendung sowohl des Querspannungssollwerts (UQ*) als auch des Längsspannungssollwerts (UD*) ermittelt.

## Beschreibung

Die vorliegende Erfindung geht aus von einem Steuerverfahren für eine elektrische Maschine,
- wobei ein erstes Aktivteil der elektrischen Maschine mittels eines Umrichters an eine Versorgungsspannung angeschaltet wird, so dass das erste Aktivteil mit Strömen eines Drehstromsystems beaufschlagt wird,
- wobei einer den Umrichter steuernden Steuereinrichtung ein Geschwindigkeitssollwert vorgegeben wird,
- wobei die Steuereinrichtung anhand des Geschwindigkeitssollwerts einen Basiskommutierungswinkel fortschreibt,
- wobei die Steuereinrichtung anhand der Ströme des Drehstromsystems und eines Kommutierungswinkels einen Längsstrom und einen Querstrom ermittelt,
- wobei der Längsstrom und der Querstrom auf ein mit dem ersten Aktivteil zusammenwirkendes zweites Aktivteil der elektrischen Maschine bezogen sind,
- wobei die Steuereinrichtung einen Querstromsollwert und den Querstrom einem Querstromregler zuführt, der daraus einen Querspannungssollwert ermittelt,
- wobei die Steuereinrichtung einen Längsstromsollwert und den Längsstrom einem Längsstromregler zuführt, der daraus einen Längsspannungssollwert ermittelt,
- wobei die Steuereinrichtung anhand des Längsspannungssollwerts, des Querspannungssollwerts und des Kommutierungswinkels für vom Umrichter an das erste Aktivteil auszugebende Spannungen eines Drehspannungssystems charakteristische Daten ermittelt und dem Umrichter vorgibt,
- wobei die Steuereinrichtung den Kommutierungswinkel unter Verwendung des Basiskommutierungswinkels und eines Dämpfungskommutierungswinkels ermittelt.

Die vorliegende Erfindung geht weiterhin aus von einem Computerprogramm, das Maschinencode umfasst, der von einer Steuereinrichtung eines Umrichters abarbeitbar ist, wobei die Abarbeitung des Maschinencodes durch die Steuereinrichtung bewirkt, dass die Steuereinrichtung den Umrichter gemäß einem derartigen Steuerverfahren steuert.

Die vorliegende Erfindung geht weiterhin aus von einer Steuereinrichtung für einen Umrichter.

Die vorliegende Erfindung geht weiterhin aus von einer elektrischen Maschine,
- wobei die elektrische Maschine ein erstes Aktivteil aufweist,
- wobei das erste Aktivteil mittels eines Umrichters an eine Versorgungsspannung angeschaltet wird, so dass das erste Aktivteil mit Strömen eines Drehstromsystems beaufschlagt wird,
- wobei der Umrichter von einer Steuereinrichtung gesteuert wird.

Steuerverfahren für elektrische Maschinen sind in verschiedenen Ausgestaltungen bekannt. So ist beispielsweise für elektrische Synchronmaschinen insbesondere ein sogenannter geregelter Betrieb bekannt. Im geregelten Betrieb wird das erste Aktivteil mit einem Querstrom beaufschlagt, der exakt so groß ist, dass durch den Querstrom eine Bewegung des zweiten Aktivteils der elektrischen Maschine relativ zum ersten Aktivteil bewirkt wird. Der geregelte Betrieb wird beispielsweise für Linearantriebe bei der DE 101 50 318 A1 und der DE 101 50 319 C1 vorausgesetzt. Auch in der DE 10 2008 008 602 A1 wird der geregelte Betrieb vorausgesetzt.

Für Synchronmaschinen ist weiterhin ein sogenannter gesteuerter Betrieb bekannt. Im gesteuerten Betrieb wird das erste Aktivteil mit einem Längsstrom beaufschlagt, der hinreichend groß bemessen ist, um mit Sicherheit die Bewegung des zweiten Aktivteils der elektrischen Maschine relativ zum ersten Aktivteil zu bewirken. Der Querstrom wird möglichst gering gehalten oder durch Vorgabe eines entsprechenden Querstromsollwerts vorgesteuert. Durch Fortschalten des Längsstroms entsprechend der gewünschten Bewegung folgt die Relativbewegung des zweiten Aktivteils relativ zum ersten Aktivteil dem durch den Längsstrom hervorgerufenen Magnetfeld. Im gesteuerten Betrieb - in der Praxis oftmals auch als I/f-Betrieb bezeichnet - kann es jedoch zu mechanischen Schwingungen kommen, welche der gewünschten Relativbewegung des zweiten Aktivteils relativ zum ersten Aktivteil überlagert sind. In vielen Fällen ist eine Dämpfung derartiger Schwingungen erforderlich. Möglichkeiten zur Dämpfung derartiger Schwingungen sind als solche bekannt. Rein beispielhaft wird auf die DE 195 19 238 A1 verwiesen.

Die Verfahren des Standes der Technik arbeiten nicht im gesamten Geschwindigkeitsbereich einwandfrei.

Die Aufgabe der vorliegenden Erfindung besteht darin, Möglichkeiten zu schaffen, mittels derer auf einfache Weise eine effiziente Schwingungsdämpfung der Relativbewegung im gesamten Geschwindigkeitsbereich möglich ist.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 13.

Erfindungsgemäß wird ein Steuerverfahren der eingangs genannten Art dadurch ausgestaltet, dass die Steuereinrichtung den Dämpfungskommutierungswinkel unter Verwendung sowohl des Längsspannungssollwerts als auch des Querspannungssollwerts ermittelt.

Vorzugsweise wird der Querspannungssollwert mit einem ersten Koeffizienten gewichtet und in dieser Form zur Ermittlung des Dämpfungskommutierungswinkels verwendet. Der Querspannungssollwert kann vor oder nach dem Wichten einer Filterung unterzogen werden, insbesondere einer Bandpassfilterung. Vorzugsweise wird der Längsspannungssollwert mit einem zweiten Koeffizienten gewichtet und sodann integriert. Das Ergebnis der Integration wird zur Ermittlung des Dämpfungskommutierungswinkels verwendet. Der Längsspannungssollwert kann vor dem Integrieren einer Filterung unterzogen werden, insbesondere einer Bandpassfilterung.

Vorzugsweise verwendet die Steuereinrichtung zur Ermittlung des Dämpfungskommutierungswinkels zusätzlich den Geschwindigkeitssollwert. Insbesondere ist es möglich, dass die Steuereinrichtung zur Ermittlung des Dämpfungskommutierungswinkels den Geschwindigkeitssollwert mit einer ersten Kenngröße wichtet und das Ergebnis der Wichtung vom Querspannungssollwert subtrahiert.

Alternativ oder zusätzlich - vorzugsweise zusätzlich - ist es möglich, dass der Längsspannungssollwert mit dem zweiten Koeffizienten gewichtet und durch den Geschwindigkeitssollwert dividiert wird, sodann integriert wird und das Ergebnis der Integration zur Ermittlung des Dämpfungskommutierungswinkels verwendet wird. In diesem Fall wird vorzugsweise der Längsspannungssollwert vor dem Dividieren durch den Geschwindigkeitssollwert einer Filterung unterzogen.

Vorzugsweise verwendet die Steuereinrichtung zur Ermittlung des Dämpfungskommutierungswinkels zusätzlich den Querstromsollwert. Insbesondere ist es möglich, dass die Steuereinrichtung den Querstromsollwert mit einer zweiten Kenngröße wichtet und das Ergebnis der Wichtung vom Querspannungssollwert subtrahiert.

Es ist möglich, dass der Steuereinrichtung zusätzlich ein Beschleunigungssollwert vorgegeben wird und die Steuereinrichtung den Querstromsollwert anhand des Beschleunigungssollwerts ermittelt.

Das Steuerverfahren kann alternativ bei einer rotatorischen elektrischen Maschine oder bei einem elektrischen Linearantrieb angewendet werden.

Die Aufgabe wird weiterhin durch ein Computerprogramm mit den Merkmalen des Anspruchs 14 gelöst. Erfindungsgemäß ist ein Computerprogramm der eingangs genannten Art derart ausgestaltet, dass die Abarbeitung des Maschinencodes durch die Steuereinrichtung bewirkt, dass die Steuereinrichtung den Umrichter gemäß einem erfindungsgemäßen Steuerverfahren steuert.

Die Aufgabe wird weiterhin durch eine Steuereinrichtung mit den Merkmalen des Anspruchs 15 gelöst. Erfindungsgemäß ist die Steuereinrichtung mit einem erfindungsgemäßen Computerprogramm programmiert.

Die Aufgabe wird weiterhin durch eine elektrische Maschine mit den Merkmalen des Anspruchs 16 gelöst. Erfindungsgemäß ist die Steuereinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine,
- FIG 2: eine Steuereinrichtung eines Umrichters,
- FIG 3: eine Modifikation der Steuereinrichtung von FIG 2,
- FIG 4: einen Schwingungsdämpfungsblock und
- FIG 5: einen weiteren Schwingungsdämpfungsblock.

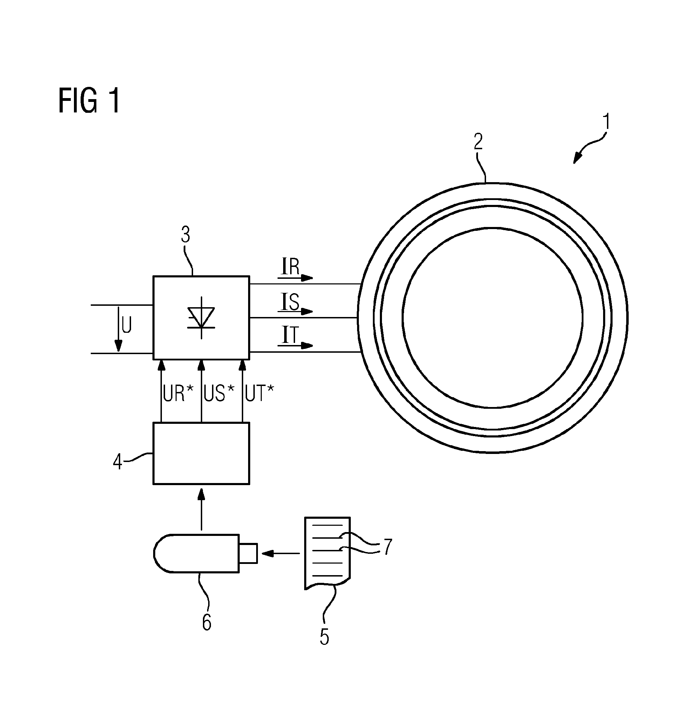

Gemäß FIG 1 weist eine elektrische Maschine 1 ein erstes Aktivteil 2 auf. Das erste Aktivteil 2 wird mittels eines Umrichters 3 an eine Versorgungsspannung U angeschaltet. Dadurch wird das erste Aktivteil 2 mit Strömen IR, IS, IT eines Drehstromsystems beaufschlagt. In aller Regel ist das Drehstromsystem als dreiphasiges Drehstromsystem ausgebildet. In Ausnahmefällen können jedoch auch vier oder fünf Phasen vorhanden sein.

Der Umrichter 3 wird von einer Steuereinrichtung 4 gesteuert. Die Steuereinrichtung 4 ist mit einem Computerprogramm 5 programmiert. Das Computerprogramm 5 kann der Steuereinrichtung 4 beispielsweise über einen Datenträger 6 (rein beispielhaft ist in FIG 1 als Datenträger 6 ein USB-Memorystick dargestellt) zugeführt werden. Das Computerprogramm 5 umfasst Maschinencode 7, der von der Steuereinrichtung 4 abarbeitbar ist. Die Abarbeitung des Maschinencodes 7 durch die Steuereinrichtung 4 bewirkt, dass die Steuereinrichtung 4 den Umrichter 3 gemäß einem Steuerverfahren steuert, das nachstehend in Verbindung mit den weiteren FIG näher erläutert wird.

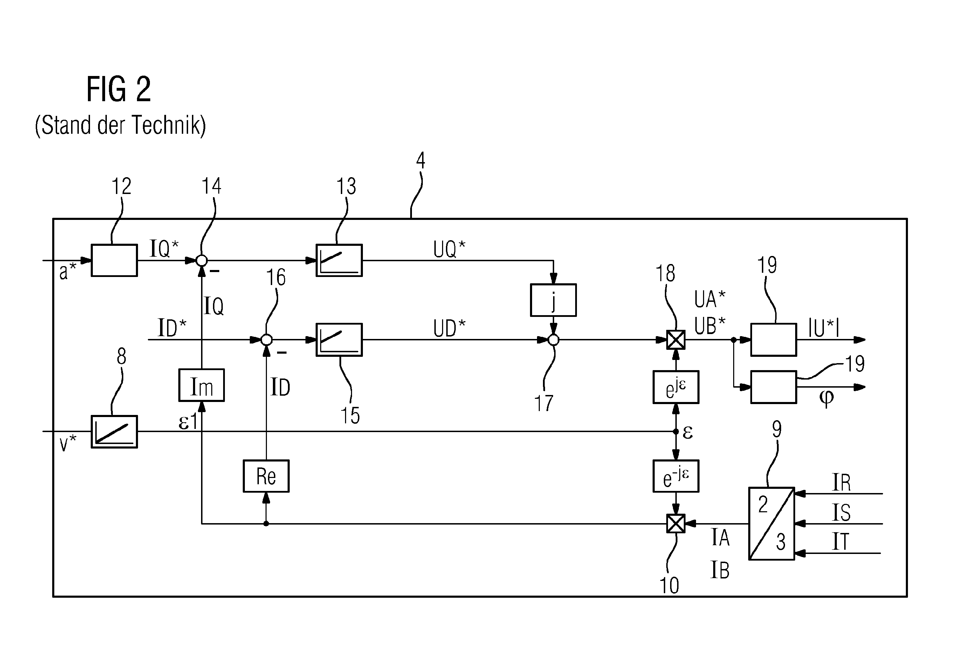

Gemäß FIG 2 wird der Steuereinrichtung 4 ein Geschwindigkeitssollwert v* vorgegeben. Der Geschwindigkeitssollwert v* wird einem Integrator 8 zugeführt. Mittels des Integrators 8 schreibt die Steuereinrichtung 4 anhand des Geschwindigkeitssollwerts v* einen Basiskommutierungswinkel ε1 fort.

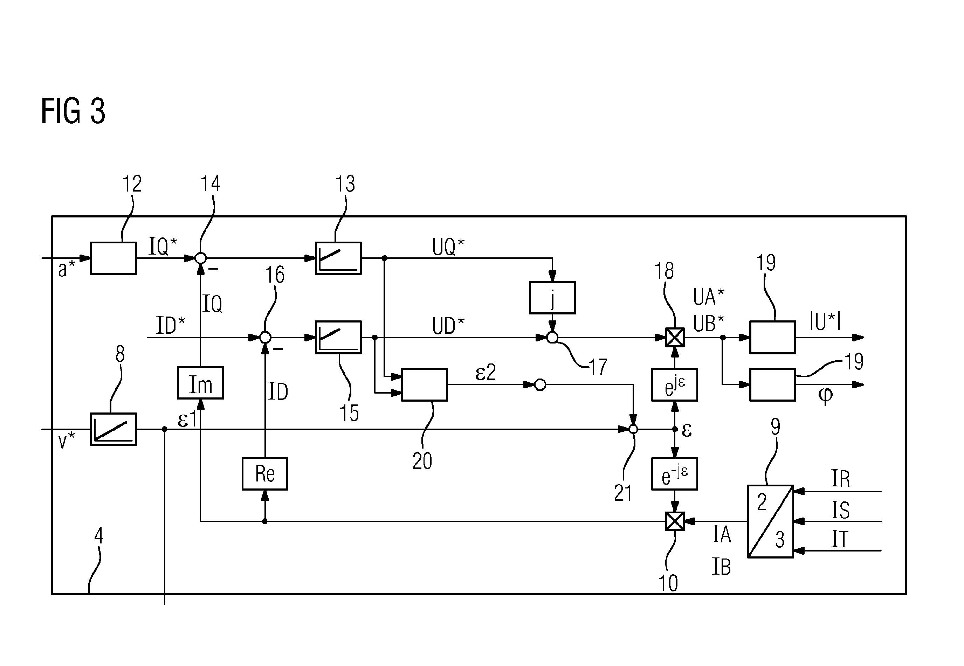

Der Basiskommutierungswinkel ε1 korrespondiert im Rahmen der Ausgestaltung von FIG 2 zugleich auch mit einem Kommutierungswinkel ε. Im Vorgriff auf auf die späteren Ausführungen zu den FIG 3 wird dennoch nachfolgend zwischen dem Basiskommutierungswinkel ε1 und dem Kommutierungswinkel ε unterschieden.

Mittels entsprechender Sensoren werden weiterhin für den von der Steuereinrichtung 4 gesteuerten Umrichter 3 die Ströme IR, IS, IT des Drehstromsystems erfasst und der Steuereinrichtung 4 zugeführt. Die erfassten Ströme IR, IS und IT werden einem Ermittlungsblock 9 zugeführt. Mittels des Ermittlungsblocks 9 erfolgt eine Umrechnung in orthogonale Stromkomponenten IA, IB. Die Stromkomponenten IA, IB sind auf das erste Aktivteil 2 bzw. den Umrichter 3 bezogen. Die Umrechnung ist Fachleuten allgemein bekannt und geläufig.

Die Steuereinrichtung 4 ermittelt anhand der orthogonalen Stromkomponenten IA, IB und des Kommutierungswinkels ε einen Längsstrom ID und einen Querstrom IQ. Zu diesem Zweck werden die orthogonalen Stromkomponenten IA, IB zu einer komplexen Größe (Stromraumzeiger) zusammengefasst und in dieser Form einem Multiplizierer 10 zugeführt. Die Stromkomponente IA korrespondiert mit dem Realteil der komplexen Größe, die Stromkomponente IB mit dem Imaginärteil der komplexen Größe. Dem Multiplizierer 10 wird weiterhin die komplexe Größe e^{-jε} zugeführt. Der Multiplizierer 10 führt die (komplexe) Multiplikation durch. Das Ergebnis der komplexen Multiplikation ist eine weitere komplexe Größe, deren Real- und Imaginärteil mit dem Längsstrom ID und dem Querstrom IQ korrespondieren. Die beiden Ströme ID, IQ sind somit ebenfalls orthogonal zueinander. Sie sind jedoch auf ein zweites Aktivteil 11 (siehe FIG 1) der elektrischen Maschine 1 bezogen. Auch diese Umrechnung ist Fachleuten bekannt und geläufig.

Im gesteuerten Betrieb korrespondieren die ermittelten Ströme ID, IQ genau genommen nicht notwendigerweise tatsächlich mit den realen, auf das zweite Aktivteil 11 bezogenen Strömen. Denn für eine exakte Berechnung müsste die Lage des zweiten Aktivteils 11 relativ zum ersten Aktivteil 2 bekannt sein. Dies ist jedoch nicht der Fall. In der Praxis führt die erläuterte Vorgehensweise jedoch zu einem ordnungsgemäßen Betrieb der elektrischen Maschine 1.

Das zweite Aktivteil 11 wirkt mit dem ersten Aktivteil 2 zusammen. Insbesondere sind die beiden Aktivteile 2, 11 relativ zueinander bewegbar. Im Falle einer rotatorischen elektrischen Maschine 1 korrespondiert das erste Aktivteil 2 in der Regel mit dem Stator der elektrischen Maschine 1, das zweite Aktivteil 11 mit dem Läufer oder Rotor der elektrischen Maschine 1. Im Falle eines elektrischen Linearantriebs korrespondiert das erste Aktivteil 2 mit dem Primärteil des Linearantriebs, das zweite Aktivteil 11 mit dem Sekundärteil des Linearantriebs.

Die Steuereinrichtung 4 führt einen Querstromsollwert IQ* und den Querstrom IQ einem Querstromregler 13 zu. Insbesondere kann zunächst in einem Knotenpunkt 14 die Differenz von Querstromsollwert IQ* und Querstrom IQ gebildet werden und dem Querstromregler 13 diese Differenz zugeführt werden. Der Querstromregler 13 ermittelt aus dem Querstromsollwert IQ* und dem Querstrom IQ einen Querspannungssollwert UQ*. Es ist möglich, dass der Querstromsollwert IQ* der Steuereinrichtung 4 vorab bekannt ist, beispielsweise konstant den Wert Null aufweist. Alternativ kann der Querstromsollwert IQ* der Steuereinrichtung 4 von außen vorgegeben werden oder von der Steuereinrichtung 4 aus dem Geschwindigkeitssollwert v* abgeleitet werden. Wiederum alternativ ist es möglich, dass der Steuereinrichtung 4 - zusätzlich zum Geschwindigkeitssollwert v* - ein Beschleunigungssollwert a* vorgegeben wird. In diesem Fall ermittelt die Steuereinrichtung 4 den Querstromsollwert IQ* in einem weiteren Ermittlungsblock 12 in an sich bekannter Weise anhand des Beschleunigungssollwerts a*.

In analoger Weise führt die Steuereinrichtung 4 einem Längsstromregler 15 einen Längsstromsollwert ID* und den Längsstrom ID zu. Insbesondere kann zunächst in einem Knotenpunkt 16 die Differenz von Längsstromsollwert ID* und Längsstrom ID gebildet werden und dem Längsstromregler 15 diese Differenz zugeführt werden. Der Längsstromregler 15 ermittelt aus dem Längsstromsollwert ID* und dem Längsstrom ID einen Längsspannungssollwert UD*. Der Längsstromsollwert ID* kann nach Bedarf festgelegt sein.

Der Querstromregler 13 kann nach Bedarf ausgebildet sein, beispielsweise als PI-Regler. In analoger Weise kann auch der Längsstromregler 15 nach Bedarf ausgebildet sein, beispielsweise als PI-Regler. In der Regel sind der Querstromregler 13 und der Längsstromregler 15 gleichartig ausgebildet und auf gleiche Weise parametriert.

Die Steuereinrichtung 4 ermittelt anhand des Längsspannungssollwerts UD*, des Querspannungssollwerts UQ* und des Kommutierungswinkels ε Daten, die für Spannungen UR*, US*, UT* eines Drehspannungssystems charakteristisch sind. Die Spannungen UR*, US*, UT* sind diejenigen Spannungen, die vom Umrichter 3 an das erste Aktivteil 2 ausgegeben werden sollen.

Zur Ermittlung der charakteristischen Daten werden der Längsspannungssollwert UD* und der Querspannungssollwert UQ* einem weiteren Knotenpunkt 17 zugeführt. Vor dem Zuführen zum Knotenpunkt 17 wird der Querspannungssollwert UQ* mit der imaginären Einheit j multipliziert. Das Ausgangssignal des Knotenpunkts 17 ist somit eine komplexe Größe, deren Realteil mit dem Längsspannungssollwert UD* und deren Imaginärteil mit dem Querspannungssollwert UQ* korrespondiert (Spannungsraumzeiger). Die im Knotenpunkt 17 ermittelte komplexe Größe wird einem Multiplizierer 18 zugeführt. Dem Multiplizierer 18 wird weiterhin die komplexe Größe e^{jε} zugeführt. Der Multiplizierer 18 führt die (komplexe) Multiplikation durch. Das Ergebnis der komplexen Multiplikation ist eine weitere komplexe Größe, deren Real- und Imaginärteil mit orthogonalen Spannungskomponenten UA*, UB* korrespondieren. Sie sind jedoch nicht mehr auf das zweite Aktivteil 11, sondern auf das erste Aktivteil 2 bezogen. Auch diese Umrechnung ist Fachleuten allgemein bekannt und geläufig.

Bereits die Spannungskomponenten UA*, UB* sind charakteristisch für die Spannungen UR*, US*, UT*, die vom Umrichter 3 an das erste Aktivteil 2 ausgegeben werden müssen. Es ist daher möglich, dass die Steuereinrichtung 4 dem Umrichter 3 die Spannungskomponenten UA*, UB* vorgibt.

Es ist jedoch ebenso eine Vorgabe anderer charakteristischer Daten möglich. Insbesondere kann die Steuereinrichtung 4 mittels eines Ermittlungsblocks 19 eine Umrechnung der Spannungskomponenten UA*, UB* in Betrag und Phasenlage ϕ der auszugebenden Spannung U* vornehmen. Auch diese Daten sind charakteristisch für die vom Umrichter 3 an das erste Aktivteil 2 ausgegebenen Spannungen UR*, US*, UT*. Auch ist es möglich, dass die Steuereinrichtung 4 direkt die Spannungen UR*, US*, UT* selbst ermittelt und dem Umrichter 3 vorgibt. Auch diese beiden Umrechnungen sind Fachleuten allgemein bekannt und geläufig.

Die charakteristischen Daten - also entweder die Spannungskomponenten UA*, UB* oder der Betrag und die Phasenlage ϕ der Spannung U* oder die Spannungen UR*, US*, UT* selbst - werden dem Umrichter 3 von der Steuereinrichtung 4 vorgegeben.

Die obenstehend in Verbindung mit FIG 2 erläuterte Vorgehensweise ist als solche Fachleuten allgemein bekannt. Im gesteuerten Betrieb wird weiterhin in der Regel der Querstromsollwert IQ* auf den Wert 0 festgesetzt oder gemäß einer vordefinierten Funktion vorgesteuert. Für den Längsspannungssollwert ID* ist es in der Regel ausreichend, wenn er hinreichend groß vorgegeben wird und im Übrigen konstant gehalten wird. Die Vorgabe des Querstromsollwerts IQ* kann explizit erfolgen. Alternativ ist es möglich, dass der Querstromsollwert IQ* durch den Beschleunigungssollwert a* oder durch den Betriebsmodus "gesteuerter Betrieb" als solchen festgelegt ist.

FIG 3 zeigt vom Ansatz her dieselben Komponenten wie FIG 2. Zusätzlich sind jedoch ein Schwingungsdämpfungsblock 20 und ein Knotenpunkt 21 vorhanden. Dem Schwingungsdämpfungsblock 20 werden gemäß FIG 3 der Längsspannungssollwert UD* und der Querspannungssollwert UQ* zugeführt. Mittels des Schwingungsdämpfungsblocks 20 ermittelt die Steuereinrichtung 4 einen Dämpfungskommutierungswinkel ε2. Die Ermittlung des Dämpfungskommutierungswinkels s2 erfolgt unter Verwendung sowohl des Längsspannungssollwerts UD* als auch des Querspannungssollwerts UQ*. Die Ermittlung erfolgt derart, dass einer mechanischen Schwingung, die der gewünschten Bewegung des zweiten Aktivteils 11 relativ zum ersten Aktivteil 2 überlagert ist, entgegengewirkt wird. Die gewünschte Bewegung der beiden Aktivteile 2, 11 ist durch den Geschwindigkeitssollwert v* definiert. Im Knotenpunkt 21 bildet die Steuereinrichtung 4 die Summe des Basiskommutierungswinkels ε1 und des Dämpfungskommutierungswinkels ε2. Das Ergebnis der Summation entspricht dem Kommutierungswinkel ε.

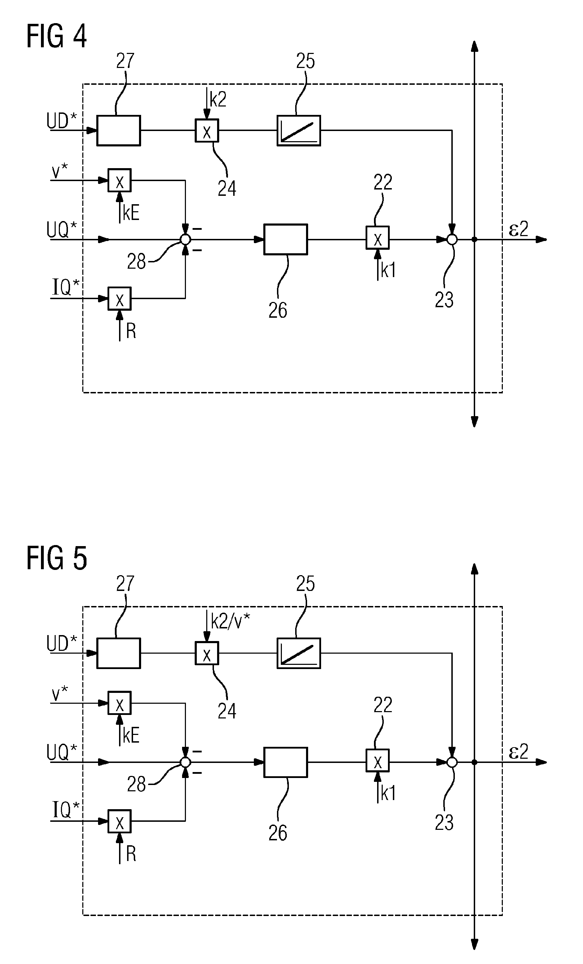

FIG 4 zeigt eine bevorzugte Ausgestaltung des Schwingungsdämpfungsblocks 20.

Gemäß FIG 4 wird der Querspannungssollwert UQ* in einem Multiplizierer 22 mit einem ersten Koeffizienten k1 multipliziert und somit entsprechend gewichtet. In dieser Form wird der Querspannungssollwert UQ* zur Ermittlung des Dämpfungskommutierungswinkels ε2 verwendet. Insbesondere wird das Ergebnis der Wichtung einem Knotenpunkt 23 zugeführt. Weiterhin wird dem Knotenpunkt 23 eine aus dem Längsspannungssollwert UD* ermittelte Größe zugeführt. Zu diesem Zweck wird der Längsspannungssollwert UD* zunächst in einem Multiplizierer 24 mit einem zweiten Koeffizienten k2 multipliziert und somit entsprechend gewichtet. Sodann wird der (gewichtete) Längsspannungssollwert UD* mittels eines Integrators 25 integriert. Das Ergebnis der Integration wird zur Ermittlung des Dämpfungskommutierungswinkels ε2 verwendet. Insbesondere wird das Ergebnis der Integration dem Knotenpunkt 23 zugeführt. Im Knotenpunkt 23 erfolgt eine Summation der beiden dem Knotenpunkt 23 zugeführten Größen.

Vorzugsweise wird der Querspannungssollwert UQ* in einem Filter 26 einer Filterung unterzogen. Die Filterung kann alternativ vor oder nach dem Wichten mit dem ersten Koeffizienten k1 erfolgen. Vorzugsweise wird weiterhin auch der Längsspannungssollwert UD* vor dem Integrieren in einem Filter 27 einer Filterung unterzogen. Die Filterung kann alternativ vor oder nach dem Wichten mit dem zweiten Koeffizienten k2 erfolgen.

Die Filterungen in den Filtern 26, 27 können nach Bedarf ausgestaltet sein. Insbesondere kann es sich jeweils um eine Bandpassfilterung handeln. Mittels der Filterung wird insbesondere der jeweilige Gleichanteil der Spannungssollwerte UD*, UQ* aus dem jeweiligen Signal entfernt. Weiterhin können andere Störgrößen aus dem jeweiligen Signal ausgefiltert werden.

FIG 4 zeigt auch weitere bevorzugte Ausgestaltungen des Schwingungsdämpfungsblocks 20.

So wird beispielsweise dem Schwingungsdämpfungsblock 20 zusätzlich auch der Geschwindigkeitssollwert v* zugeführt. Der Schwingungsdämpfungsblock 20 verwendet den Geschwindigkeitssollwert v* bei der Ermittlung des Dämpfungskommutierungswinkels ε2. Beispielsweise kann entsprechend der Darstellung in FIG 4 der Geschwindigkeitssollwert v* mit einer ersten Kenngröße kE gewichtet werden und das Ergebnis der Wichtung in einem Knotenpunkt 28 von dem Querspannungssollwert UQ* subtrahiert werden. Die erste Kenngröße kE kann durch elektrische Kenngrößen des ersten Aktivteils 2 bestimmt sein.

Alternativ oder zusätzlich - vorzugsweise zusätzlich - ist es möglich, dass dem Schwingungsdämpfungsblock 20 der Querstromsollwert IQ* zugeführt wird. In diesem Fall verwendet der Schwingungsdämpfungsblock 20 den Querstromsollwert IQ* bei der Ermittlung des Dämpfungskommutierungswinkels ε2. Beispielsweise kann entsprechend der Darstellung in FIG 4 der Querstromsollwert IQ* mit einer zweiten Kenngröße R gewichtet werden und das Ergebnis der Wichtung im Knotenpunkt 28 von dem Querspannungssollwert UQ* subtrahiert werden. Die zweite Kenngröße R kann beispielsweise durch den Wicklungswiderstand von Wicklungen des ersten Aktivteils 2 bestimmt sein, insbesondere mit ihm übereinstimmen.

FIG 5 zeigt eine Abwandlung des Schwingungsdämpfungsblocks 20 von FIG 4. Der Unterschied zum Schwingungsdämpfungsblock 20 von FIG 4 besteht im wesentlichen darin, dass dem Multiplizierer 24 als Faktor der Wert k2/v* zugeführt wird. Im Ergebnis wird somit zwar weiterhin der Längsspannungssollwert UD* mit dem zweiten Koeffizienten k2 gewichtet. Zusätzlich wird der Längsspannungssollwert UD* jedoch durch den Geschwindigkeitssollwert v* dividiert. Erst danach erfolgt im Integrator 25 die Integration. Wie bei der Ausgestaltung von FIG 4 auch kann der Längsspannungssollwert UD* einer Filterung unterzogen werden. Die Filterung erfolgt in diesem Fall vor dem Dividieren durch den Geschwindigkeitssollwert v*.

Zusammengefasst betrifft die vorliegende Erfindung somit folgenden Sachverhalt:
Ein erstes Aktivteil 2 der elektrischen Maschine wird mittels eines Umrichters 3 an eine Versorgungsspannung U angeschaltet und dadurch mit Strömen IR, IS, IT eines Drehstromsystems beaufschlagt. Einer Steuereinrichtung 4 wird ein Geschwindigkeitssollwert v* vorgegeben. Anhand des Geschwindigkeitssollwerts v* schreibt die Steuereinrichtung 4 einen Basiskommutierungswinkel ε1 fort. Anhand der Ströme IR, IS, IT des Drehstromsystems und eines Kommutierungswinkels ε ermittelt sie einen Längsstrom ID und einen Querstrom IQ, die beide auf ein zweites Aktivteil 11 der elektrischen Maschine bezogen sind. Die Steuereinrichtung 4 führt einen Querstromsollwert und einen Querstrom IQ einem Querstromregler 13 zu, der daraus einen Querspannungssollwert UQ* ermittelt. Die Steuereinrichtung 4 führt einen Längsstromsollwert ID* und den Längsstrom ID einem Längsstromregler 15 zu, der daraus einen Längsspannungssollwert UD* ermittelt. Die Steuereinrichtung 4 ermittelt anhand des Längsspannungssollwerts UD*, des Querspannungssollwerts UQ* und des Kommutierungswinkels ε für vom Umrichter 3 an das erste Aktivteil 2 auszugebende Spannungen UR*, US*, UT* eines Drehspannungssystems charakteristische Daten und gibt sie dem Umrichter 3 vor. Die Steuereinrichtung 4 ermittelt den Kommutierungswinkel ε unter Verwendung des Basiskommutierungswinkels ε1 und eines Dämpfungskommutierungswinkels ε2, den sie unter Verwendung sowohl des Querspannungssollwerts UQ* als auch des Längsspannungssollwerts UD* ermittelt.

Die vorliegende Erfindung weist viele Vorteile auf. Insbesondere ist auf einfache Weise eine effiziente Dämpfung von Schwingungen des zweiten Aktivteils 11 der elektrischen Maschine 1 relativ zum ersten Aktivteil 2 der elektrischen Maschine 1 im gesteuerten Betrieb möglich. Die erfindungsgemäßen Vorgehensweisen kann ohne weiteres bei einer vorhandenen Steuereinrichtung 4 durch entsprechende Anpassung der Betriebssoftware nachgerüstet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für eine elektrische Maschine,
- wobei ein erstes Aktivteil (2) der elektrischen Maschine mittels eines Umrichters (3) an eine Versorgungsspannung (U) angeschaltet wird, so dass das erste Aktivteil (2) mit Strömen (IR, IS, IT) eines Drehstromsystems beaufschlagt wird,
- wobei einer den Umrichter (3) steuernden Steuereinrichtung (4) ein Geschwindigkeitssollwert (v*) vorgegeben wird,
- wobei die Steuereinrichtung (4) anhand des Geschwindigkeitssollwerts (v*) einen Basiskommutierungswinkel (ε1) fortschreibt,
- wobei die Steuereinrichtung (4) anhand der Ströme (IR, IS, IT) des Drehstromsystems und eines Kommutierungswinkels (ε) einen Längsstrom (ID) und einen Querstrom (IQ) ermittelt, wobei der Längsstrom (ID) und der Querstrom (IQ) auf ein mit dem ersten Aktivteil (2) zusammenwirkendes zweites Aktivteil (11) der elektrischen Maschine bezogen sind,
- wobei die Steuereinrichtung (4) einen Querstromsollwert (IQ*) und den Querstrom (IQ) einem Querstromregler (13) zuführt, der daraus einen Querspannungssollwert (UQ*) ermittelt,
- wobei die Steuereinrichtung (4) einen Längsstromsollwert (ID*) und den Längsstrom (ID) einem Längsstromregler (15) zuführt, der daraus einen Längsspannungssollwert (UD*) ermittelt,
- wobei die Steuereinrichtung (4) anhand des Längsspannungssollwerts (UD*), des Querspannungssollwerts (UQ*) und des Kommutierungswinkels (ε) für vom Umrichter (3) an das erste Aktivteil (2) auszugebende Spannungen (UR*, US*, UT*) eines Drehspannungssystems charakteristische Daten ermittelt und dem Umrichter (3) vorgibt,
- wobei die Steuereinrichtung (4) den Kommutierungswinkel (ε) unter Verwendung des Basiskommutierungswinkels (ε1) und eines Dämpfungskommutierungswinkels (ε2) ermittelt,
- wobei die Steuereinrichtung (4) den Dämpfungskommutierungswinkel (ε2) unter Verwendung sowohl des Längsspannungssollwerts (UD*) als auch des Querspannungssollwerts (UQ*) ermittelt.

2. Steuerverfahren nach Anspruch 1,
**dadurch gekennzeichnet,**
**dass** der Querspannungssollwert (UQ*) mit einem ersten Koeffizienten (k1) gewichtet wird und in dieser Form zur Ermittlung des Dämpfungskommutierungswinkels (ε2) verwendet wird.

3. Steuerverfahren nach Anspruch 2,
**dadurch gekennzeichnet,**
**dass** der Querspannungssollwert (UQ*) vor oder nach dem Wichten einer Filterung unterzogen wird.

4. Steuerverfahren nach Anspruch 1, 2 oder 3,
**dadurch gekennzeichnet,**
**dass** der Längsspannungssollwert (UD*) mit einem zweiten Koeffizienten (k2) gewichtet wird, sodann integriert wird und das Ergebnis der Integration zur Ermittlung des Dämpfungskommutierungswinkels (ε2) verwendet wird.

5. Steuerverfahren nach Anspruch 4,
**dadurch gekennzeichnet,**
**dass** der Längsspannungssollwert (UD*) vor dem Integrieren einer Filterung unterzogen wird.

6. Steuerverfahren nach Anspruch 1, 2 oder 3,
**dadurch gekennzeichnet,**
**dass** die Steuereinrichtung (4) zur Ermittlung des Dämpfungskommutierungswinkels (ε2) zusätzlich den Geschwindigkeitssollwert (v*) verwendet.

7. Steuerverfahren nach Anspruch 6,
**dadurch gekennzeichnet,**
**dass** die Steuereinrichtung (4) zur Ermittlung des Dämpfungskommutierungswinkels (ε2) den Geschwindigkeitssollwert (v*) mit einer ersten Kenngröße (kE) wichtet und das Ergebnis der Wichtung vom Querspannungssollwert (UQ*) subtrahiert.

8. Steuerverfahren nach Anspruch 6 oder 7,
**dadurch gekennzeichnet,**
**dass** der Längsspannungssollwert (UD*) mit einem zweiten Koeffizienten (k2) gewichtet und durch den Geschwindigkeitssollwert (v*) dividiert wird, sodann integriert wird und das Ergebnis der Integration zur Ermittlung des Dämpfungskommutierungswinkels (ε2) verwendet wird.

9. Steuerverfahren nach Anspruch 8,
**dadurch gekennzeichnet,**
**dass** der Längsspannungssollwert (UD*) vor dem Dividieren durch den Geschwindigkeitssollwert (v*) einer Filterung unterzogen wird.

10. Steuerverfahren nach einem der obigen Ansprüche,
**dadurch gekennzeichnet,**
**dass** die Steuereinrichtung (4) zur Ermittlung des Dämpfungskommutierungswinkels (ε2) zusätzlich den Querstromsollwert (IQ*) verwendet.

11. Steuerverfahren nach Anspruch 10,
**dadurch gekennzeichnet,**
**dass** die Steuereinrichtung (4) den Querstromsollwert (IQ*) mit einer zweiten Kenngröße (R) wichtet und das Ergebnis der Wichtung vom Querspannungssollwert (UQ*) subtrahiert.

12. Steuerverfahren nach einem der obigen Ansprüche,
**dadurch gekennzeichnet,**
**dass** der Steuereinrichtung (4) zusätzlich ein Beschleunigungssollwert (a*) vorgegeben wird und dass die Steuereinrichtung (4) den Querstromsollwert (IQ*) anhand des Beschleunigungssollwerts (a*) ermittelt.

13. Steuerverfahren nach einem der Ansprüche 1 bis 12,
**dadurch gekennzeichnet,**
**dass** es bei einer rotatorischen elektrischen Maschine oder bei einem elektrischen Linearantrieb angewendet wird.

14. Computerprogramm, das Maschinencode (7) umfasst, der von einer Steuereinrichtung (4) eines Umrichters (3) abarbeitbar ist, wobei die Abarbeitung des Maschinencodes (7) durch die Steuereinrichtung (4) bewirkt, dass die Steuereinrichtung (4) den Umrichter (3) gemäß einem Steuerverfahren nach einem der obigen Ansprüche steuert.

15. Steuereinrichtung für einen Umrichter (3),
**dadurch gekennzeichnet,**
**dass** die Steuereinrichtung mit einem Computerprogramm (5) nach Anspruch 14 programmiert ist.

16. Elektrische Maschine,
- wobei die elektrische Maschine ein erstes Aktivteil (2) aufweist,
- wobei das erste Aktivteil (2) mittels eines Umrichters (3) an eine Versorgungsspannung (U) angeschaltet wird, so dass das erste Aktivteil (2) mit Strömen (IR, IS, IT) eines Drehstromsystems beaufschlagt wird,
- wobei der Umrichter (3) von einer Steuereinrichtung (4) gesteuert wird,
**dadurch gekennzeichnet,**
**dass** die Steuereinrichtung (4) gemäß Anspruch 15 ausgebildet ist.
